# EUROPEAN PATENT SPECIFICATION

(11) **EP 2 736 827 B1**
(45) Date of publication and mention of the grant of the patent: **30.08.2017**
(21) Application number: 12817442.2
(22) Date of filing: 17.07.2012
(51) Int. Cl.: B66B 1/30, H02P 27/08, H02M 5/45, B66B 1/32

(54) **ELECTRICITY SUPPLY DEVICE AND ELEVATOR SYSTEM**
STROMVERSORGUNGSVORRICHTUNG UND AUFZUGSSYSTEM
DISPOSITIF D'ALIMENTATION ÉLECTRIQUE ET SYSTÈME D'ASCENSEUR

(30) Priority: 28.07.2011 FI 20115771
(43) Date of publication of application: 04.06.2014
(60) Divisional application: 15191942.0
(73) Proprietor: Kone Corporation, 00330 Helsinki (FI)
(72) Inventor: KALLIONIEMI, Antti, FI-05400 Jokela (FI); STOLT, Lauri, FI-00320 Helsinki (FI)
(74) Representative: K & H Bonapat Patentanwälte Koch · von Behren & Partner mbB
(86) International application number: PCT/FI2012/050739
(87) International publication number: WO 2013/014334

(56) References cited:
- EP-A2- 0 827 262
- WO-A1-2007/118576
- WO-A1-2010/056226
- WO-A1-2010/089450
- DE-A1-102005 062 580
- US-A1- 2010 309 700

## Description

### Field of the invention

The invention relates to electricity supply apparatuses for elevators.

### Background of the invention

In an elevator system various drive devices, such as the hoisting machine and also the machinery brakes, are controlled by adjusting the flow of electric power occurring in the drive device. By controlling the power supply of the electric motor of a hoisting machine, the speed of an elevator car can be steplessly adjusted. The machinery brake, on the other hand, is opened by supplying current to the magnetizing coil of the electromagnet of the machinery brake, and the machinery brake is activated by disconnecting the current supply of the magnetizing coil of the electromagnet.

The power supply to the different drive devices of an elevator system is controlled with electricity supply devices, the power output stages of which comprise controllable electronic solid-state switches. For example, the power supply of an alternating-current motor of a hoisting machine is usually controlled with a frequency converter, the power output stage of which is formed from IGBT transistors configured into a bridge circuit. The IGBT transistors are connected e.g. with PWM modulation, such that a modulated voltage forms in the phases of the electric motor, the frequency and amplitude of the fundamental frequency of which can be adjusted by changing the modulation index. The switching frequency of IGBT transistors can in this case be e.g. approx. 3 - 5 kilohertz. Such prior art technology is for example disclosed in documents WO 2010/056226 A1 or WO 2010/089450 A1. Further, it had been known from document DE 10 2005 062 580 A1 to use silicium carbide IGB-transistors to avoid noise which could be otherwise felt awkward by passengers.

A switching frequency of 3 - 5 kilohertz produces a loud noise in the alternating-current motor of the hoisting machine that might disturb elevator passengers and people in the building in the immediate proximity of the elevator.

### Aim of the invention

The inventors have ascertained that raising the switching frequency reduces the noise problem. On the other hand, the load current flowing through the IGBT transistors of a frequency converter cause power losses in the IGBT transistors. The power losses are formed from line losses and from switching losses. The switching losses increase as the switching frequency increases, in which case an increase in switching losses ultimately causes destruction of the transistor owing to overheating. Power losses also cause a cyclical fluctuation in the temperature of power semiconductors. The fluctuation in temperature in turn reduces the lifetime of semiconductors. Consequently, increasing the switching frequency in order to reduce noise problems significantly shortens the service life of a frequency converter, which in turn increases the need for servicing of the elevator and causes, *inter alia*, the elevator to be out of service unnecessarily often.

One solution option would be to dimension the IGBT transistors and/or the cooling apparatus of the frequency converter for a significantly greater power endurance than the rated one, in which case the overdimensioned frequency converter would enable an increase in the switching frequency of the IGBT transistors. The solution would not, however, be competitive in terms of cost; in addition, the size of the frequency converter would grow to be too large from the viewpoint of space efficiency requirements. The aim is normally to utilize built space as efficiently as possible, so that the large size of an overdimensioned frequency converter would be a problem e.g. in elevator systems without machine rooms, in which the frequency converter is disposed in the elevator hoistway.

It is also endeavored to design the other electricity supply devices of the elevator system to be as space efficient as possible; e.g. the electricity supply device of the machinery brakes is normally disposed in the elevator electrification control cubicle, in which case when minimizing the size of the control cubicle it would also have to be possible to reduce the size of the electricity supply device of the machinery brakes.

Consequently, the aim of the invention is to provide a solution to one or more of the aforementioned drawbacks and/or to the drawbacks disclosed in the description of the invention below. To achieve this aim the invention discloses an electricity supply device according to claim 1 and also an elevator system according to claim 9. The preferred embodiments of the invention are described in the dependent claims. Some inventive embodiments and inventive combinations of the various embodiments are also presented in the descriptive section and in the drawings of the present application.

### Summary of the invention

The electricity supply device according to the invention for supplying electric power in an elevator system comprises a controllable power output stage, comprising a connection to the load of the elevator system to be supplied. The aforementioned power output stage comprises one or more controllable solid-state switches in the form of silicon carbide (SiC) solid-state switches. By means of controllable silicon carbide solid-state switches, such as silicon carbide bipolar transistors, silicon carbide IGBT transistors and also silicon carbide MOSFET transistors, the switching frequency of the power output stage supplying the load in the elevator system can be increased without the switching losses becoming too large. This is a result of the material property of silicon carbide semiconductors, according to which the speed of travel of the electrons in a silicon carbide semiconductor is greater than in conventional power semiconductors, which reduces the switching losses of the silicon carbide power semiconductor. On the other hand, the energy bandwidth of a silicon carbide semiconductor, i.e. the amount of energy achieving a flow of current in the silicon carbide semiconductor, is smaller than conventional semiconductors - only approx, 3 - 3.2 electron-volts - owing to which the warming of a silicon carbide semiconductor does not have the same kind of effect on the operation of the power semiconductor as the effect of heating has on conventional power semiconductors. For this reason silicon carbide semiconductors can, in some embodiments, be used at significantly higher temperatures than conventional power semiconductors, in which case the dimensioning of the cooling apparatus of the power output stage comprising a silicon carbide semiconductor/silicon carbide semiconductors can be reduced. The dimensioning of the cooling apparatus of the power output stage can, in some embodiments, also be reduced because silicon carbide semiconductors have better thermal conductivity as well as smaller losses, and especially smaller switching losses, than conventional semiconductors. When reducing the dimensioning of a cooling apparatus of a power output stage, the size of the electricity supply device of the elevator comprising the power output stage also decreases, which improves the space efficiency of the electricity supply device.

In the invention, the term power output stage refers to the main circuit formed by the power semiconductors and other power components (filtering components, connectors, current conductors, *et cetera*), via which the power flow in the electricity supply device occurs. In addition, the power output stage can comprise, *inter alia*, a cooling apparatus, such as a heat sink or other element conducting heat well for cooling one or more power components of the main circuit.

According to the invention the aforementioned load of the elevator system to be supplied is a drive device of an elevator, and the electricity supply device is a control device, which is configured, by adjusting the flow of electric power, to control the drive device of the elevator for achieving the desired function in the elevator system.

Further, according to the invention the drive device is a hoisting machine of an elevator, which is configured in a first operating situation to receive electric power and in a second operating situation to generate electric power by braking the movement of the elevator car. The power output stage comprises controllable silicon carbide solid-state switches, which are configured as a network bridge for achieving variable-amplitude variable-frequency supply current for the hoisting machine of the elevator. By means of the solution the aforementioned dimensioning advantages are achieved in power output stages supplying the hoisting machine of the elevator, the power supply capacity of which power output stages can vary from a few kilowatts right up to some tens of kilowatts and even to larger power output stages than this.

According to the invention the power output stage comprises controllable silicon carbide solid-state switches configured as a network bridge, and the power output stage comprises a mains choke in connection with the network bridge, which mains choke comprises a connection to the electricity network for returning electric power generated by the hoisting machine. When using silicon carbide solid-state switches, the switching frequency of the solid-state switches of the network bridge can be raised to higher than that of prior art, in which case the disturbing noise produced in the mains choke by the switching frequency of the network bridge is essentially reduced. The switching frequency of the network bridge can be e.g. 20 kilohertz or over, or even 50 kilohertz. In this case also the inductance of the mains choke can be reduced, owing to which the core material of the mains choke and/or the magnitude of the air gap can be selected in different ways; the mains choke can in this case e.g. be fabricated without a conventional winding core manufactured from strongly magnetizable dynamo plate. All this reduces the losses of the choke, simplifies the structure of the choke and decreases the noise level of the choke. In some embodiments of the invention the mains choke is an air-core choke. According to the invention, the inductance of the mains choke is below 10 millihenries. In some embodiments of the invention the inductance of the mains choke is approx. 1 millihenry or even less.

In a preferred embodiment of the invention the drive device is a machinery brake of an elevator, and the aforementioned one or more silicon carbide solid-state switches of the power output stage are arranged to be connected with a high-frequency switching reference for controlling the electricity supply of the electromagnet of the machinery brake. This enables the current of the excitation winding of the electromagnet of the machinery brake to be adjusted quickly and accurately; in turn, by means of a faster and more accurate adjustment of current the machinery brake can be controlled better e.g. for reducing the noise produced by the operation of the brake.

In a preferred embodiment of the invention the power output stage comprises a direct-current intermediate circuit. An intermediate circuit capacitor is preferably connected in parallel with the direct-current intermediate circuit. By means of the capacitor the voltage fluctuation produced in the direct-current intermediate circuit by the flow of power can be reduced. Since silicon carbide semiconductors withstand larger voltage fluctuations than conventional semiconductors, the size of the intermediate circuit capacitor can also be made smaller than a conventional one; consequently capacitors of smaller capacitance, e.g. plastic capacitors or aluminium capacitors, can be used as an intermediate circuit capacitor instead of the electrolytic capacitors conventionally used.

The electricity supply device can comprise fixing means for fixing the electricity supply device on an essentially vertical supporting structure in the elevator system. A cooling duct is preferably formed in connection with the power output stage such that the cooling substance flows in the duct essentially in the direction of the surface of the supporting structure when the electricity supply device is fixed into position on the vertical supporting structure. In this case the electricity supply device can be made to be extremely flat in the normal direction of the surface of the supporting structure, and it can be disposed e.g. in the narrow space remaining between the path of movement of the elevator car and a wall part of the elevator hoistway, which improves the space efficiency of the elevator system.

In a preferred embodiment of the invention the electricity supply device comprises a control circuit for controlling a drive device of an elevator. In a preferred embodiment a thermal barrier is made between the silicon carbide solid-state switches of the power output stage and the control circuit for reducing the thermal flow occurring from the silicon carbide solid-state switches to the control circuit.

In some embodiments the control circuit is configured to form a switching reference for controlling the aforementioned one or more silicon carbide semiconductors of the power output stage.

In a preferred embodiment of the invention the switching frequency of the aforementioned one or more silicon carbide semiconductors is raised to be so high that the noise caused in a drive device of the elevator by the switching frequency is in essential respects outside human hearing range. The switching frequency can be e.g. 20 kilohertz or over, or even 50 kilohertz or over. When using silicon carbide solid-state switches, the EMC interference produced by operation of the switch is also smaller than in connection with conventional solid-state switches, which for its part enables an increase in the switching frequency. As a result of the reduction in EMC interference, the amount of EMC shielding, such as protective enclosures, ferrites and other such shielding components and filtering components, can be reduced.

The elevator system according to the invention comprises an electricity supply device according to the invention for supplying electric power in the elevator system.

The aforementioned electricity supply device can be fixed in connection with a wall part of the elevator hoistway.

The electricity supply device and the hoisting machine of the elevator can be disposed in the same place in the elevator hoistway, and the power output stage is isolated from the control circuit and also from the hoisting machine with a thermal barrier for reducing the thermal flow occurring from the power output stage to the control circuit and to the hoisting machine.

The electricity supply device according to the invention is also suited for use e.g. in connection with an escalator, a travelator or a sliding ramp.

The preceding summary, as well as the additional features and additional advantages of the invention presented below, will be better understood by the aid of the following description of some embodiments, said description not limiting the scope of application of the invention.

### Brief explanation of the figures

- Fig. 1: presents as a block diagram an elevator system according to the invention
- Figs. 2a, 2b: present the power output stages of some electricity supply devices according to the invention
- Fig. 3: presents the placement of a power supply device in one elevator system, said elevator system having no machine room
- Figs. 4a, 4b: illustrate the placement of components in some frequency converters
- Fig. 5: illustrates an electric drive of an elevator

### More detailed description of preferred embodiments of the invention

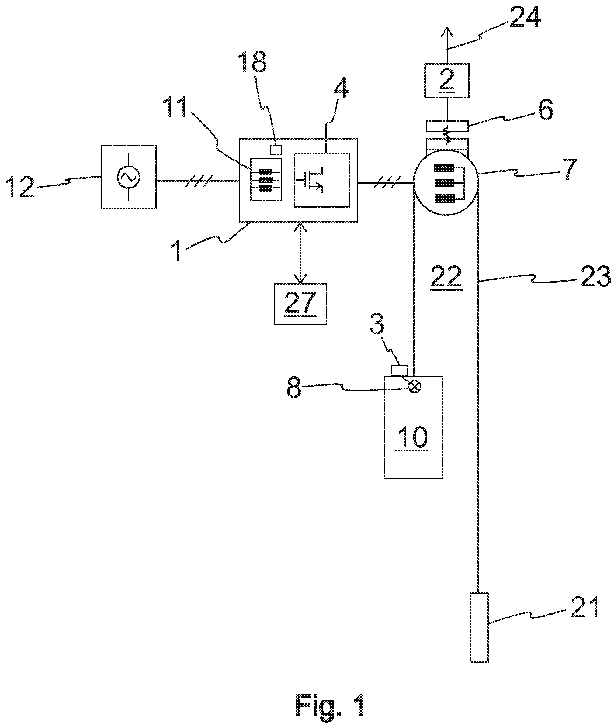

In the elevator system of Fig. 1, which has no machine room, the elevator car 10 and the counterweight 21 are suspended in the elevator hoistway 22 with suspension means 23, such as with ropes or a belt, passing via the traction sheave of the hoisting machine 7. The traction sheave of the hoisting machine 7 engages by frictional traction with the suspension means 23, in which case the elevator car 10 can be driven in the elevator hoistway 22 with the hoisting machine 7 along a path of movement determined by the guide rails (not shown in figure) of the elevator car, by transmitting the power needed for driving the elevator car 10 from the traction sheave of the hoisting machine 7 via the suspension means 23 to the elevator car 10. The hoisting machine 7 is, in this embodiment of the invention, fixed to the guide rail of the elevator car, in a space between the guide rail and a wall part 16 of the elevator hoistway. The hoisting machine 7 could, however, also be fixed e.g. to a machine bedplate, and the hoisting machine could also be disposed elsewhere in the elevator hoistway, such as in the pit of the elevator hoistway or in the proximity of the pit, or the hoisting machine can also be disposed in a machine room instead of in the elevator hoistway (when an elevator system having a machine room is in question). In this embodiment of the invention the tractive power needed for moving the elevator car 10 is also transmitted via the suspension means 23, but the elevator system could also comprise separate means for the suspension of and for the moving of the elevator car 10, preferably in solutions wherein the hoisting machine 7 is disposed in the bottom part of the elevator hoistway 22.

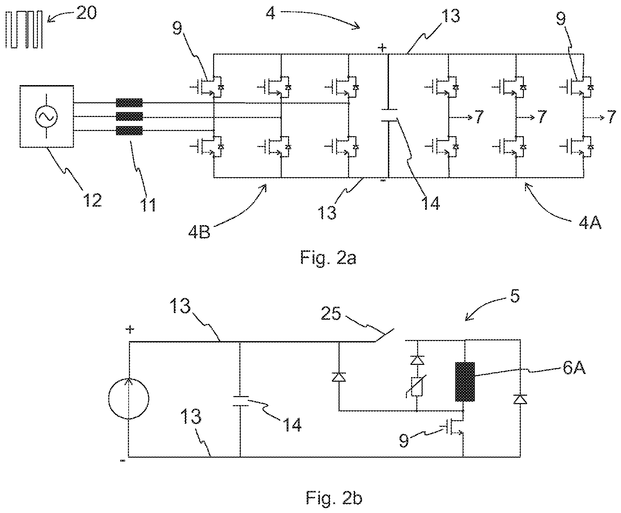

The hoisting machine 7 comprises as the power producing part an electric motor, more precisely a three-phase synchronous motor, the rotor of which is magnetized with permanent magnets. The power supply to the stator of the electric motor of the hoisting machine 7 occurs with a frequency converter 1 from an electricity network 12. The electric drive is a four-quadrant drive, and the hoisting machine 7 of the elevator is configured in a first operating situation to receive electric power from an electricity network 12 and in a second operating situation, in connection with motor braking, to generate electric power by braking the movement of the elevator car 10. The elevator car 10 is driven from one floor to another by adjusting the speed of the hoisting machine 7 of the elevator, and thereby of the elevator car 10, with a frequency converter 1 configured for this purpose, towards the speed reference, i.e. the target value for speed, of the elevator car 10 calculated by the elevator control unit 27. The circuit of the main circuit of the power output stage 4 of the frequency converter 1 of Fig. 1 is presented in more detail in Fig. 2a. The phases of the motor bridge 4A belonging to the power output stage 4 are connected to the electric motor of the hoisting machine 7 of the elevator. The motor bridge 4A is implemented with controllable silicon carbide solid-state switches, more particularly with silicon carbide MOSFET transistors 9, which are connected with pulse width modulation 20 for achieving variable-amplitude variable-frequency supply current for the electric motor. An antiparallel-connected silicon carbide Schottky diode is fitted in parallel with each controllable silicon carbide MOSFET transistor 9. A silicon carbide semiconductor is a compound of silicon and carbon, which can be doped for achieving current conductibility. Nitrogen or phosphorus, for example, can be used for doping for increasing the n-type charge carriers or aluminium, boron, gallium or beryllium for increasing the p-type charge carriers.

The frequency converter 1 is of a type that brakes regeneratively to the network, and also the network bridge 4B of the power output stage 4 of the frequency converter is implemented with controllable silicon carbide MOSFET transistors 9. The three-phase alternating-current part of the network bridge 4B is connected to a three-phase mains choke 11 and also via the mains choke onwards to the electricity network such that the mains choke is in series between the phases of the electricity network 12 and the phases of the network bridge 4B. Also other filtering components, such as filter capacitors, can be fitted in connection with the mains choke, but they are omitted here from the description for the sake of clarity. The network bridge 4B and the motor bridge 4A are connected to each other with a direct-current intermediate circuit 13. The direct-current intermediate circuit also comprises a filter capacitor 14, by the aid of which the voltage fluctuations of the direct-current intermediate circuit 14 are smoothed out. Also the network bridge 4B is connected with pulse width modulation 20 such that by means of the network bridge electric power can be supplied between the electricity network 12 and the direct-current intermediate circuit 13 in both directions. The switching frequency of the silicon carbide solid-state switches 9 both of the network bridge 4B and of the motor bridge 4A has been raised to over 20 kilohertz, in which case the noise level produced in the hoisting machine 7 of the elevator by the switching frequency of the motor bridge 4A as well as, on the other hand, the noise level caused in the mains choke 11 by the switching frequency of the network bridge 4B are both therefore outside the range of human hearing, so that noise disturbing to elevator passengers or to other people in the vicinity of the elevator is not produced from the operation of the network bridge 4B/motor bridge 4A. The quietening of the noise level is a result partly of the fact that the human ear is unable to hear higher frequencies as well as, on the other hand, also of the fact that an increase in switching frequency reduces the current ripple of the hoisting machine 7 and also of the mains choke 11; when the current ripple decreases the noise level of the hoisting machine 7/mains choke 11 abates. Increasing the switching frequency has also been enabled because it is possible to fabricate the mains choke 11 to be of lower inductance than prior art, in which case it was possible to implement the mains choke 11 as an air-core choke or as a ferrite-core choke.

The frequency converter 1, with mains choke 11, is disposed in the elevator hoistway in the proximity of the hoisting machine 7 such that the frequency converter 1 is fixed to a wall part 16 of the elevator hoistway.

In Fig. 1, a machinery brake 6, which comprises a stationary frame part and also an armature part movably supported on the frame part, is fitted in connection with the hoisting machine 7 of the elevator. The machinery brake 6 comprises springs, which when the brake activates press the armature part into contact with the rotating brake drum of the hoisting machine 7 to brake the movement of the traction sheave of the hoisting machine 7. The brake 6 is opened by exerting a force of attraction on the armature part by means of the electromagnet in the frame part of the brake, which force of attraction pulls the armature part off the brake drum. For exerting a force of attraction the electromagnet comprises a magnetizing coil 6A, into which current is supplied with the brake control unit 2. The circuit of the main circuit of the power output stage 5 of the brake control unit 2 is described in more detail in Fig. 2b. The current supply to the magnetizing coil 6A of the brake occurs from the direct-current intermediate circuit 13 of the brake control unit 2, which intermediate circuit is formed e.g. by rectification from the supply voltage 24 of the safety circuit of the elevator. The direct-current intermediate circuit 13 also comprises a filter capacitor 14, with which the voltage fluctuations of the direct-current intermediate circuit 13 are smoothed out. The power output stage 5 comprises a cut-off device 25, such as a mechanical relay or a corresponding solid-state component, by means of which the electricity supply to the magnetizing coil 6A is disconnected during a standstill of the elevator as well as e.g. in a malfunction, in an emergency stop situation or in connection with some other functional nonconformance of the elevator. In addition the power output stage 5 comprises a silicon carbide MOSFET transistor 9, by means of which the magnitude of the current of the magnetizing coil 6A is adjusted. For adjusting the current the silicon carbide solid-state switch is connected with pulse width modulation of e.g. approx. 20 - 50 kilohertz frequency.

Silicon carbide semiconductors 9 can in some cases be used at considerably high temperatures, in which case the dimensioning of the cooling apparatus of the power output stage 4, 5 comprising a silicon carbide semiconductor/silicon carbide semiconductors can be reduced. The dimensioning of the cooling apparatus of the power output stage 4, 5 can be reduced also because of the excellent thermal conductivity of silicon carbide semiconductors 9 as well as because of their small losses, more particularly small switching losses. When reducing the dimensioning of a cooling apparatus of a power output stage 4, 5, the size of the electricity supply device 1, 2 comprising the power output stage in question also decreases, which improves the space efficiency of the electricity supply device 1, 2. Consequently, the use of a silicon carbide MOSFET transistor enables, in addition to a higher switching frequency, also minimization of the size of the frequency converter 1 and of the brake control unit 2.

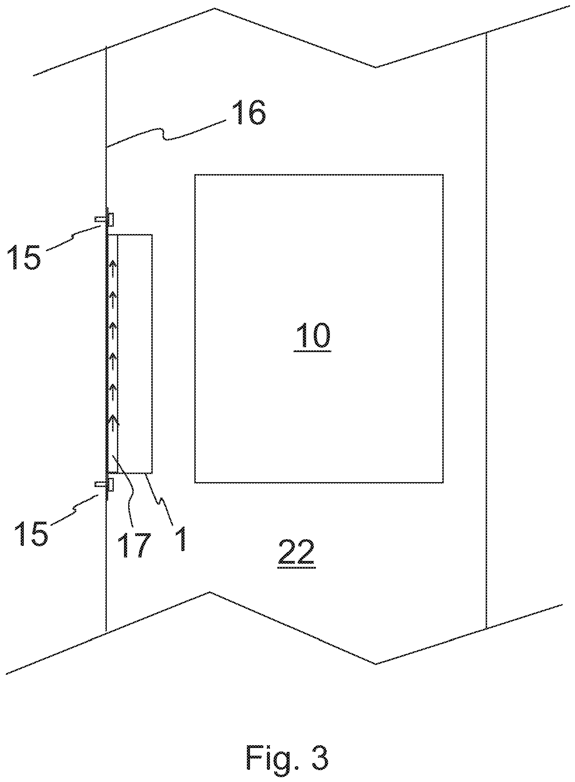

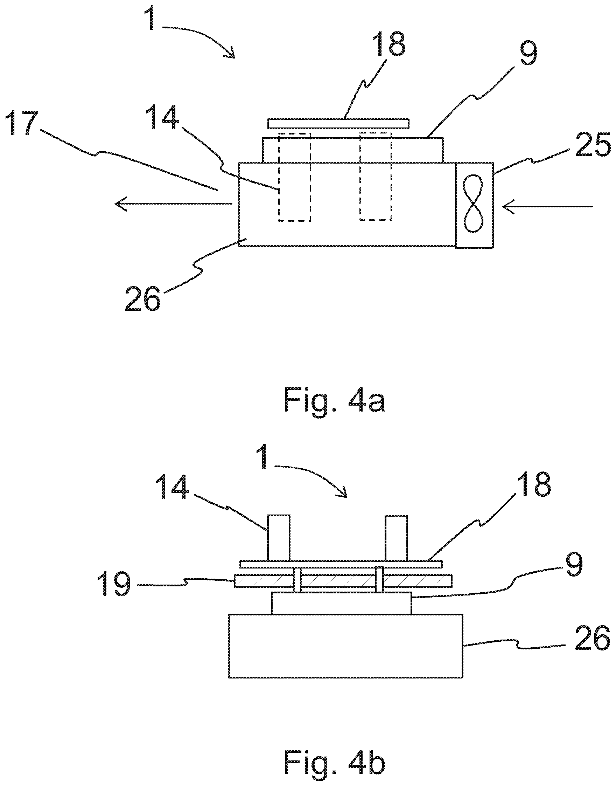

Fig. 3 presents in more detail the placement of a frequency converter 1 in the elevator system of Fig. 1. The frequency converter 1 is fixed with screws 15 to a wall part 16 of the elevator hoistway 22 such that the frequency converter 1 is situated in the narrow space remaining between the path of movement of the elevator car 10 and the wall part 16. For this reason the frequency converter 1 is made to be as flat as possible by, among other things, disposing the cooling duct 17 of the power output stage 4 of the frequency converter 1 such that the cooling air flowing with forced convection flows in the duct 17 essentially in the direction of the surface of the wall part 16, when the frequency converter 1 is fixed according to Fig. 3 into position on a wall part 16. Fig. 4a describes in more detail by way of example a partial layout of a frequency converter designed to be flat, with the direction of the air flowing in the cooling duct 17 being marked with an arrow in the direction from the right to the left. Consequently the cooling duct 17 has a fan 25, which brings about a forced convection through the heat sink 26 of the silicon carbide solid-state switches 9 of the power output stage 4.

The capacitors 14 of the direct-current intermediate circuit have been lowered to beside the heat sink 26 such that they remain in the direction of viewing Fig. 4a partly behind the heat sink 26/silicon carbide semiconductors 9. A second cooling duct based on free convection travels through the direct-current intermediate circuit capacitors 14, the direction of the air flow in said duct being the same as in the cooling duct of the fans 25 and which second cooling duct is disposed in the direction of viewing Fig. 4b behind the cooling duct of the heat sink 26. The control cards 18 are disposed on top of the capacitors 14 such that they are situated slightly farther from the strongly warming silicon carbide power semiconductors 9. When the frequency converter 1 is fixed into position on a wall part 16 of the elevator hoistway, according to Fig. 3, the fan 25 is situated on the bottom part of the frequency converter 1, in which case the air in the parallel cooling ducts 17 flows from below upwards.

Fig. 4b presents one alternative component placement of a frequency converter 1, which placement is particularly suited to layouts of an elevator hoistway demanding high space efficiency but in which the frequency converter does not need to be flat in the same manner as is presented in the embodiments of Figs. 3 and 4a. One such can be e.g. a layout in which the hoisting machine 7 of the elevator and the frequency converter 1 are disposed in the bottom part of the elevator hoistway, preferably in the pit of the elevator hoistway or in the immediate proximity of the pit. In Fig. 4b the silicon carbide solid-state switches 9 of the frequency converter are disposed above the heat sink 26. Above the solid-state switches 9 is a thermal barrier 19 fabricated from a thermally insulating material, above which thermal barrier the control cards 18 and also the direct-current intermediate circuit capacitors 14 are disposed. In the thermal barrier 19 are holes, through which the necessary control cables are taken and also through which the direct-current intermediate circuit capacitors 14 are connected with metallic elevating pillars to the circuit of the silicon carbide solid-state switches 9 in a manner that conducts electricity. The purpose of the thermal barrier 19 here is to reduce the flow of heat from the silicon carbide semiconductors 9 to the control cards 18 and to the direct-current intermediate circuit capacitors 14. This type of solution is particularly advantageous in those cases in which silicon carbide solid-state switches 9 are used at very high temperatures of over 200 degrees Celsius or even of over 300 degrees Celsius.

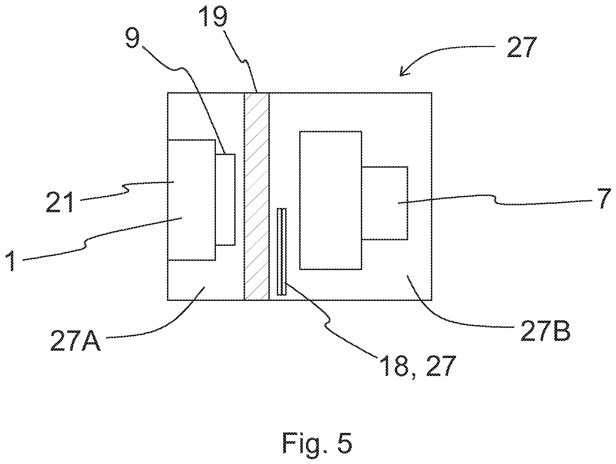

Fig. 5 presents a second alternative component layout of an electric drive of an elevator, in which the frequency converter 1 and the hoisting machine 7 of the elevator are disposed in the same place in the elevator hoistway, such that the frequency converter 1 and the hoisting machine 7 are integrated into the same enclosed machine bedplate 27. The machine bedplate comprises two separate chambers 27A, 27B, into the first 27A of which the silicon carbide solid-state switches 9, with cooling apparatuses 21, of the frequency converter are fitted and in the second 27B are the hoisting machine 7 of the elevator and the control cards 18, 27. Between the first 27A and the second 27B chamber is a thermal barrier 19 fabricated from a thermally insulating material, with which the flow of heat from the silicon carbide semiconductors 9 to the control cards 18, 27 and to the hoisting machine 7 is reduced. Also the solution of Fig. 5 is advantageous when using silicon carbide solid-state switches 9 at the aforementioned very high temperatures.
In the thermal barrier 19 the material/materials insulating heat are preferably selected such that by means of the thermal barrier 19 the transfer of heat both by conduction and by radiation can be reduced. Many different materials that are *per se* known in the art can be used as a thermally insulating material, in the selection of which materials the temperature /fire resistance must also be taken into account, in addition to the thermal insulating capacity, owing to, *inter alia*, the aforementioned high temperature of the silicon carbide solid-state switches 9. Possible insulating materials are e.g. calcium silicate, glass fiber, ceramic fiber material and also some thermally insulating paints. For example, a power supply device 3 of a luminaire 8 of an elevator car can also be implemented. The power supply device 3 can be implemented as a direct-current source, more particularly when using LED luminaires for illuminating the elevator car; the power supply device 3 can also be implemented as an alternating-current source, such as an inverter. In this case the power output stage of the power supply device 3 comprises one or more silicon carbide solid-state switches 9, which are connected e.g. with PWM modulation with a high, over 20 kilohertz, switching frequency for achieving the desired illuminating effect.

Further, a power supply device can also be implemented for connecting an energy storage, such as a lithium-ion battery or a supercapacitor, in connection with the electrification of an elevator. This type of power supply device can be e.g. a DC/DC converter comprising one or more silicon carbide solid-state switches, which power supply device is configured in a first operating situation to supply electric power from the energy storage for moving the elevator car and in a second operating situation to store in the energy storage energy being released from the movement of the elevator car (in connection with motor braking).
The invention is described above by the aid of a few examples of its embodiment. It is obvious to the person skilled in the art that the invention is not only limited to the embodiments described above, but that many other applications are possible within the scope of the inventive concept defined by the claims.

## Claims

1. Electricity supply device (1, 2, 3) as a control device to adjust flow of electric power for controlling a drive device (6, 7) of an elevator for achieving the desired function of supplying electric power in an elevator system;
which electricity supply device (1, 2, 3) comprises a controllable power output stage (4, 5), comprising a connection to a hoisting machine (7) as comprised by the drive device (6, 7) of the elevator system to be supplied, which hoisting machine is configured in a first operating situation to receive electric power and in a second operating situation to generate electric power by braking the movement of an elevator car (10);
wherein the power output stage (4, 5) comprises :
- one or more controllable solid-state switches (9) in the form of silicon carbide (SiC) solid-state switches configured as a motor bridge (4A) for achieving variable-amplitude variable-frequency supply current for the hoisting machine (7) of the elevator,
- controllable silicon carbide solid-state switches (9) configured as a network bridge (4B);
**characterized in that** the power output stage (4, 5) further comprises a mains choke (11), the inductance of which being below 10 millihenries, and said mains choke (11) being set in connection with the network bridge (4B), which mains choke comprises a connection to the electricity network (12) for returning electric power generated by the hoisting machine (7).

2. Electricity supply device according to claim 1, **characterized in that** the drive device is a machinery brake (6) of an elevator;
and **in that** the aforementioned one or more silicon carbide solid-state switches (9) of the power output stage (5) are arranged to be connected with a high-frequency switching reference for controlling the electricity supply of the electromagnet (6A) of the machinery brake.

3. Electricity supply device according to any of the preceding claims, **characterized in that** the power output stage (4, 5) comprises a direct-current intermediate circuit (13).

4. Electricity supply device according to claim 3, **characterized in that** an intermediate circuit capacitor (14) is connected in parallel with the direct-current intermediate circuit (13).

5. Electricity supply device according to any of the preceding claims, **characterized in that** the electricity supply device (1, 2, 3) comprises a control circuit (18, 27) for controlling the drive device (6, 7) of the elevator.

6. Electricity supply device according to claim 5, **characterized in that** a thermal barrier (19) is made between the aforementioned one or more silicon carbide solid-state switches (9) of the power output stage (4, 5) and the control circuit (18, 27) for reducing the thermal flow occurring from the silicon carbide solid-state switch/silicon carbide solid-state switches (9) to the control circuit (18, 27).

7. Electricity supply device according to claim 5 or 6, **characterized in that** the control circuit (18) is configured to form a switching reference (20) for controlling the aforementioned one or more silicon carbide semiconductors (9) of the power output stage (4, 5).

8. Electricity supply device according to claim 7, **characterized in that** the switching frequency of the aforementioned one or more silicon carbide semiconductors (9) is raised to be so high that the noise in a drive device (6, 7) of the elevator caused by the switching frequency is in essential respects outside the human hearing range.

9. Elevator system, which comprises at least one elevator car (10), which can be driven with a hoisting machine (7) of the elevator along a path of movement made in the elevator hoistway, **characterized in that** the elevator system comprises an electricity supply device (1, 2, 3) according to any of claims 1 - 8 for supplying electric power in the elevator system.

## Patentansprüche

1. Elektrische Stromversorgungsvorrichtung (1, 2, 3) als eine Steuervorrichtung zur Einstellung des elektrischen Stromflusses zum Steuern einer Antriebsvorrichtung (6, 7) eines Aufzuges zum Erhalten der gewünschten Funktion einer Stromversorgung in einem Aufzugssystem;
welche elektrische Stromversorgungsvorrichtung (1, 2, 3) eine steuerbare Leistungs-Ausgangsstufe (4, 5) aufweist, die einen Anschluss an eine Hebemaschine (7) hat, wie sie durch die Antriebsvorrichtung (6, 7) des zu versorgenden Aufzugssystems umfasst ist, welche Hebemaschine dazu konfiguriert ist, in einer ersten Betriebssituation elektrische Energie aufzunehmen und in einer zweiten Betriebssituation elektrische Energie durch Bremsen der Bewegung einer Aufzugskabine (10) zu generieren;
wobei die Leistungs-Ausgangsstufe (4, 5) aufweist:
- eine oder mehrere steuerbare Halbleiter-Schalter (9) in der Form von Siliziumcarbid-(SiC)-Halbleiterschaltern, die als eine Motorbrücke (4a) konfiguriert sind, um eine Stromzufuhr variabler Amplitude und variabler Frequenz für die Hebemaschine (7) des Aufzugs zu erhalten,
- steuerbare Siliziumcarbid-Halbleiterschalter (9), die als eine Netzwerk-Brücke (4b) konfiguriert sind;
**dadurch gekennzeichnet, dass** die Leistungsausgangsstufe (4, 5) ferner eine Netzdrossel (11) aufweisen, deren Induktanz kleiner als 10 Millihenries ist, und wobei die Netzdrossel (11) in Verbindung mit der Netzwerk-Brücke (4b) gesetzt ist, welche Netzdrossel einen Anschluss an das elektrische Netzwerk (12) zum Rückführen elektrischer Energie aufweist, die durch die Hebemaschine (7) generiert wird.

2. Elektrische Stromversorgungsvorrichtung gemäß Anspruch 1, **dadurch gekennzeichnet, dass** die Antriebsvorrichtung eine Maschinenbremse (6) eines Aufzuges ist;
und dass der eine oder die mehreren besagten Siliziumcarbid-Halbleiterschalter (9) der Leistungs-Ausgangsstufe (5) angeordnet sind, um mit einem hochfrequenten Schaltbezug zum Steuern der Stromzufuhr des Elektromagneten (6a) der Maschinenbremse angeschlossen zu werden.

3. Elektrische Stromversorgungsvorrichtung gemäß einem der vorangehenden Ansprüchen, **dadurch gekennzeichnet, dass** die Leistungs-Ausgangsstufe (4, 5) einen Gleichstrom-Zwischenkreis (13) aufweist.

4. Elektrische Stromversorgungsvorrichtung gemäß Anspruch 3, **dadurch gekennzeichnet, dass** ein Zwischenkreis-Kondensator (14) parallel zu dem Gleichstrom-Zwischenkreis (13) angeschlossen ist.

5. Elektrische Stromversorgungsvorrichtung gemäß einem der vorangehenden Ansprüche, **dadurch gekennzeichnet, dass** die elektrische Stromversorgungsvorrichtung (1, 2, 3) einen Steuerkreis (18, 27) zum Steuern der Antriebsvorrichtung (6, 7) des Aufzuges aufweist.

6. Elektrische Stromversorgungsvorrichtung gemäß Anspruch 5, **dadurch gekennzeichnet, dass** eine thermische Barriere (19) zwischen dem oder den besagten einen oder mehreren Siliziumcarbid-Halbleiterschaltern (9) der Leistungsausgangsstufe (4, 5) und dem Steuerkreis (18, 27) vorgesehen ist, um den thermischen Strom zu reduzieren, der von dem Siliziumcarbid-Halbleiterschalter / den Siliziumcarbid-Halbleiterschaltern (9) an den Steuerkreis (18, 27) auftritt.

7. Elektrische Stromversorgungsvorrichtung gemäß Anspruch 5 oder 6, **dadurch gekennzeichnet, dass** der Steuerkreis (18) dazu konfiguriert ist, eine Schaltreferenz (20) zu bilden, um den oder die mehreren besagten Siliziumcarbid-Halbleiterschalter (9) der Leistungsausgangsstufe (4, 5) zu steuern.

8. Elektrische Stromversorgungsvorrichtung gemäß Anspruch 7, **dadurch gekennzeichnet, dass** die Schaltfrequenz des oder der mehreren besagten Siliziumcarbid-Halbleiter (9) angehoben wird, um so hoch zu sein, dass das Rauschen in einer Antriebsvorrichtung (6, 7) des Aufzuges, wie es durch die Schaltfrequenz verursacht wird, im Wesentlichen außerhalb des menschlichen Hörbereichs liegt.

9. Aufzugssystem, das mindestens eine Aufzugskabine (10) aufweist, die mit einer Hebemaschine (7) des Aufzugs entlang eines Bewegungsweges verfahrbar ist, der in dem Aufzugsschacht vorgesehen ist, **dadurch gekennzeichnet, dass** das Aufzugssystem eine elektrische Stromversorgungsvorrichtung (1, 2, 3) gemäß einem der Ansprüche 1 - 8 zum Zuführen von elektrischer Energie in dem Aufzugssystem aufweist.

## Revendications

1. Dispositif d'alimentation électrique (1, 2, 3) servant de dispositif de commande pour ajuster le flux de courant électrique permettant de commander un moyen d'entraînement (6, 7) d'un ascenseur afin d'obtenir la fonction souhaitée d'alimentation en courant électrique dans un système d'ascenseur ;
ledit dispositif d'alimentation électrique (1, 2, 3) comprend une étage de sortie de puissance commandable (4, 5), comprenant une liaison à une machine de levage (7) telle que composée par le moyen d'entraînement (6, 7) du système d'ascenseur à alimenter, ladite machine de levage étant configurée dans une première situation de fonctionnement pour recevoir le courant électrique et dans une seconde situation de fonctionnement pour générer le courant électrique en freinant le mouvement d'une cabine d'ascenseur (10) ;
dans lequel l'étage de sortie de puissance (4, 5) comprend :
un ou plusieurs interrupteurs commandables à l'état solide (9) sous la forme d'interrupteurs à l'état solide en carbure de silicium (SiC) configurés sous la forme d'un pont de moteur (4A) afin d'obtenir un courant d'alimentation à amplitude variable et à fréquence variable pour la machine de levage (7) de l'ascenseur,
des interrupteurs commandables à l'état solide en carbure de silicium (9) configurés sous la forme d'un pont de réseau (4B) ;
**caractérisé en ce que** l'étage de sortie de puissance (4, 5) comprend en outre une bobine de réseau (11) dont l'inductance est inférieure à 10 millihenries, et ladite bobine de réseau (11) est définie en liaison avec le pont de réseau (4B), ladite bobine de réseau comprenant une liaison au réseau d'électricité (12) pour retourner le courant électrique généré par la machine de levage (7).

2. Dispositif d'alimentation électrique selon la revendication 1, **caractérisé en ce que** le moyen d'entraînement est un frein de machines (6) d'un ascenseur ;
et **en ce que** ledit un ou plusieurs interrupteurs à l'état solide en carbure de silicium (9) de l'étage de sortie de puissance (5) sont agencés pour être reliés à une référence de commutation haute fréquence pour commander l'alimentation électrique de l'électroaimant (6A) du frein de machines.

3. Dispositif d'alimentation électrique selon une quelconque des revendications précédentes, **caractérisé en ce que** l'étage de sortie de puissance (4, 5) comprend un circuit intermédiaire en courant continu (13).

4. Dispositif d'alimentation électrique selon la revendication 3, **caractérisé en ce qu'**un condensateur de circuit intermédiaire (14) est relié en parallèle au circuit intermédiaire en courant continu (13).

5. Dispositif d'alimentation électrique selon une quelconque des revendications précédentes, **caractérisé en ce que** le dispositif d'alimentation électrique (1, 2, 3) comprend un circuit de commande (18, 27) pour commander le moyen d'entraînement (6, 7) de l'ascenseur.

6. Dispositif d'alimentation électrique selon la revendication 5, **caractérisé en ce qu'**une barrière thermique (19) est réalisée entre lesdits un ou plusieurs interrupteurs à l'état solide en carbure de silicium (9) de l'étage de sortie de puissance (4, 5) et le circuit de commande (18, 27) afin de limiter le flux thermique se produisant à partir de l'interrupteur à l'état solide en carbure de silicium / des interrupteurs à l'état solide en carbure de silicium (9) jusqu'au circuit de commande (18, 27).

7. Dispositif d'alimentation électrique selon la revendication 5 ou 6, **caractérisé en ce que** le circuit de commande (18) est configuré pour former une référence de commutation (20) afin de commander lesdits un ou plusieurs semi-conducteurs en carbure de silicium (9) de l'étage de sortie de puissance (4, 5).

8. Dispositif d'alimentation électrique selon la revendication 7, **caractérisé en ce que** la fréquence de commutation desdits un ou plusieurs semi-conducteurs en carbure de silicium (9) est augmentée jusqu'à ce qu'elle soit élevée au point que le bruit dans un moyen d'entraînement (6, 7) de l'ascenseur causé par la fréquence de commutation soit sensiblement en dehors du champ auditif humain.

9. Système d'ascenseur, qui comprend au moins une cabine d'ascenseur (10) qui peut être entraînée avec une machine de levage (7) de l'ascenseur le long d'un trajet de déplacement réalisé dans la gaine de l'ascenseur, **caractérisé en ce que** le système d'ascenseur comprend un dispositif d'alimentation électrique (1, 2, 3) selon une des revendications 1 à 8 pour alimenter le courant électrique dans le système d'ascenseur.
